# FASCICULE DE BREVET EUROPEEN

(11) **EP 2 368 470 B1**
(45) Date de publication et mention de la délivrance du brevet: **28.08.2013**
(21) Numéro de dépôt: 11305287.2
(22) Date de dépôt: 15.03.2011
(51) Int. Cl.: A47J 43/07, A47J 43/046, A47J 43/08, A47J 43/06

(54) **Appareil électroménager de préparation culinaire comportant un boîtier supportant un bol de travail recevant un outil de fragmentation**
Elektrohaushaltsgerät zur Essenzubereitung, das ein Gehäuse mit einer Arbeitsschüsselhalterung und einem Zerkleinerungswerkzeug zum Einführen in die Schüssel umfasst
Household cooking appliance comprising a housing supporting a mixing bowl that can hold a breaking tool

(30) Priorité: 22.03.2010 FR 1052016
(43) Date de publication de la demande: 28.09.2011
(73) Titulaire: SEB S.A., 69130 Ecully (FR)
(72) Inventeur: Beunache, Michèle, 53300 La Haie Traversaine (FR); Lemarie, Christophe, 53470 Martigne sur Mayenne (FR)
(74) Mandataire: Bourrières, Patrice

(56) Documents cités:
- EP-A1- 0 004 987
- FR-A1- 2 340 707

## Description

La présente invention se rapporte au domaine technique général des appareils électroménagers de préparation culinaire comportant un boîtier supportant un bol de travail fermé par un couvercle amovible, le bol de travail recevant un outil de fragmentation entrainé en rotation par un moteur, et se rapporte plus particulièrement à un appareil électroménager dans lequel le fonctionnement du moteur est commandé par un mouvement de translation du couvercle entre une position relevée dans laquelle le moteur est à l'arrêt et une position abaissée dans laquelle le moteur est en fonctionnement.

II est connu de la demande de brevet FR 2 140 891 un appareil de préparation culinaire comportant un boîtier moteur supportant un bol de travail muni d'un outil de fragmentation, le boîtier comprenant un interrupteur pour la mise en marche du moteur pouvant être actionné par un mouvement vertical d'une jupe descendante du couvercle. Dans ce document, le boîtier moteur présente l'avantage d'être muni d'un dispositif de freinage garantissant un arrêt rapide du moteur, et donc de l'outil de fragmentation, lorsque le couvercle est retiré du boîtier moteur, pour une plus grande sécurité d'utilisation. Un tel appareil présente cependant l'inconvénient d'autoriser le débordement des poudres ou aliments liquides traités dans le bol de travail par l'extrémité supérieure du bol lorsque le couvercle est soulevé du bol de travail après une phase de mixage. En effet, dans ce cas, le soulèvement du couvercle provoque l'arrêt brutal du moteur et une perturbation du flux de mixage dans une position dans laquelle le couvercle n'est plus appliqué contre le bord supérieur du bol de travail. II s'ensuit que les aliments sous forme de poudre ou de liquide peuvent être projetés sur la paroi interne du couvercle puis s'écouler dans l'espace s'étendant verticalement entre la jupe du couvercle et le bol de travail, voire s'introduire dans le boîtier moteur, ce qui peut perturber le fonctionnement de l'appareil et être mal perçu par l'utilisateur.

Il est connu de la demande de brevet FR 2 340 707 de remédier à cet inconvénient en réalisant un couvercle en deux parties, le couvercle comportant une partie centrale et une jupe d'actionnement liées l'une à l'autre de façon télescopique, de sorte que la partie centrale du couvercle reste constamment appliquée sur le bol de travail pendant que la jupe d'actionnement peut se déplacer verticalement entre la position d'arrêt et la position de fonctionnement du moteur.

Une telle solution permet de résoudre les problèmes de débordement mais présente cependant l'inconvénient d'être relativement coûteuse à mettre en oeuvre. De plus, le couvercle en deux parties ainsi réalisé présente l'inconvénient de comporter de nombreux recoins difficiles à nettoyer.

Aussi, un but de la présente invention est de proposer un appareil électroménager de préparation culinaire comprenant un outil de fragmentation entrainé par le dessous, dans lequel la mise en marche du moteur est commandée par translation du couvercle de fermeture du bol de travail, qui résolve les problèmes de débordement et qui soit simple et économique à réaliser. Un autre but de l'invention est de proposer un appareil électroménager qui procure une grande sécurité ainsi qu'une bonne ergonomie d'utilisation et un nettoyage aisé des parties constitutives de l'appareil.

A cet effet, l'invention se rapporte à un appareil électroménager de préparation culinaire comportant un boîtier supportant un bol de travail recevant un outil de fragmentation et un couvercle amovible, le bol de travail comprenant un fond et une paroi s'étendant depuis le fond du bol de travail vers une extrémité supérieure ouverte, le boîtier renfermant un moteur pour l'entrainement de l'outil de fragmentation dont le fonctionnement est commandé par un mouvement du couvercle entre une position relevée dans laquelle le moteur est à l'arrêt et une position abaissée dans laquelle le moteur est en fonctionnement, caractérisé en ce que l'appareil comporte un opercule amovible, indépendant du couvercle, venant reposer sur la paroi du bol de travail pour masquer au moins partiellement l'extrémité supérieure ouverte du bol de travail.

De cette manière, l'opercule forme une barrière au niveau de l'extrémité supérieure ouverte du bol de travail qui limite les risque de projections d'aliments vers l'espace ouvert se formant entre le couvercle et le bol de travail lorsque le couvercle n'est pas en position abaissée. Un tel opercule présente l'avantage d'être indépendant du couvercle de sorte que le couvercle peut présenter une configuration standard et l'opercule peut posséder une forme simple qui simplifie son nettoyage et sa fabrication.

Selon une autre caractéristique de l'invention, la paroi comporte un bord supérieur délimitant l'extrémité supérieure ouverte, l'opercule reposant sur le bord supérieur du bol de travail.

Selon une autre caractéristique de l'invention, l'opercule présente une épaisseur inférieure à 1 mm.

Selon une autre caractéristique de l'invention, l'opercule comporte une gorge périphérique venant s'engager sur le bord supérieur du bol de travail.

Selon encore une autre caractéristique de l'invention, l'opercule est maintenu par déformation élastique sur le bol de travail.

Selon encore une autre caractéristique de l'invention, le couvercle comporte une surface venant prendre appui sur l'opercule lorsque le couvercle est en position abaissée.

Selon une autre caractéristique de l'invention, l'outil de fragmentation comporte un moyeu central dont l'extrémité supérieure est guidée par un élément de guidage porté par le couvercle, l'opercule comportant une ouverture centrale pour le passage du moyeu central de l'outil de fragmentation.

Selon une autre caractéristique de l'invention, le bol de travail définit une chambre de mixage autour de l'outil de fragmentation, l'opercule présentant une paroi pénétrant à l'intérieur du bol de travail afin de réduire le volume de la chambre de mixage.

Selon une autre caractéristique de l'invention, le couvercle comporte une jupe périphérique venant envelopper latéralement le bol de travail, la jupe périphérique venant actionner au moins une touche de manoeuvre portée par le boîtier pour actionner un interrupteur et commander la mise en marche du moteur lorsqu'une pression verticale est exercée manuellement sur le couvercle.

Selon une autre caractéristique de l'invention, l'appareil comporte un dispositif de freinage évitant que le moteur continue de tourner sur son inertie après la commande d'arrêt du moteur par l'interrupteur.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective partiellement éclatée d'un appareil électroménager de préparation culinaire selon un mode particulier de réalisation de l'invention,
- la figure 2 est une vue en perspective du boîtier moteur de l'appareil électroménager de la figure 1,
- la figure 3 est une vue en perspective de l'appareil de la figure 1, avec le couvercle soulevé et l'opercule reposant sur le bol de travail,
- la figure 4 est une vue en coupe de l'appareil de la figure 1 assemblé.

Seuls les éléments nécessaires à la compréhension de l'invention ont été représentés. Pour faciliter la lecture des dessins, les mêmes éléments portent les mêmes références d'une figure à l'autre.

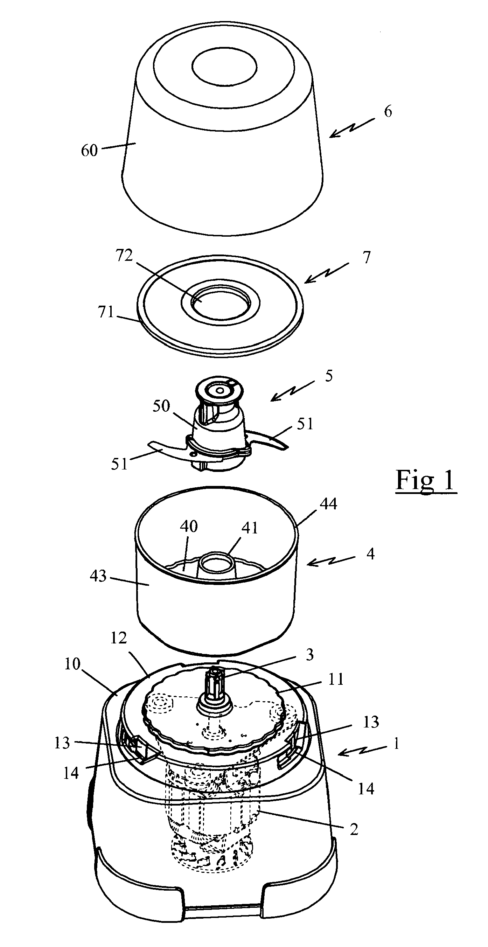

La figure 1 représente un appareil de préparation culinaire comportant un boîtier 1 comprenant un corps, présentant une forme extérieure sensiblement cubique, renfermant un moteur 2 dont l'arbre de sortie est solidaire d'un entraineur 3 faisant saillie sur un socle de réception 10 disposé à l'extrémité supérieure du boîtier 1.

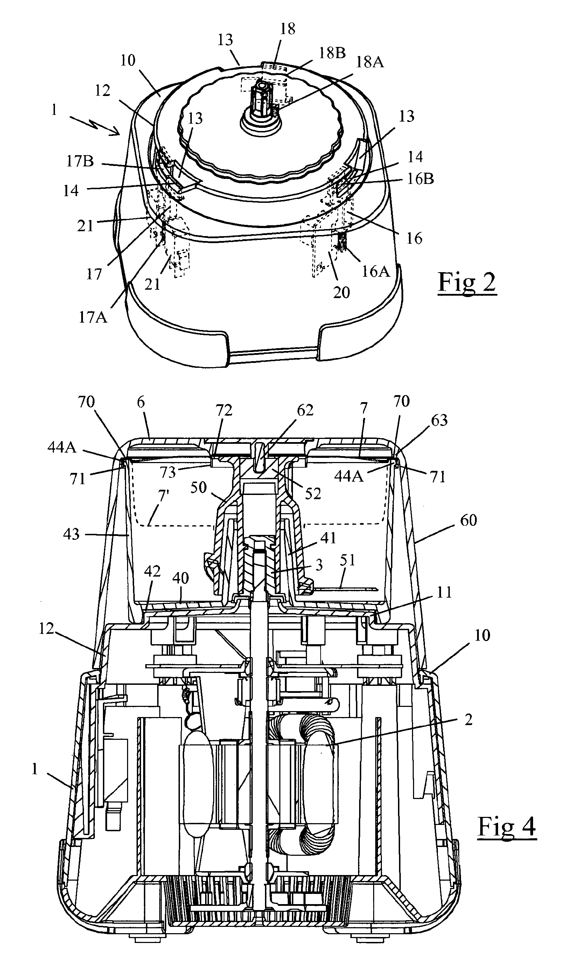

Le socle de réception 10 supporte un bol de travail 4 comportant un fond 40 muni d'une cheminée centrale 41 dans laquelle vient s'engager l'entraineur 3, le bol de travail 4 comportant une face inférieure présentant une cavité 42, visible seulement sur la figure 4, dans laquelle vient s'engager une empreinte 11 de forme complémentaire faisant saillie sur le socle de réception 10 pour assurer l'immobilisation en rotation du bol de travail 4 sur le boîtier 1.

Le bol de travail 4 reçoit un outil de fragmentation 5 comprenant un moyeu 50 supportant deux lames coupantes 51 disposées à l'opposé l'une de l'autre, le moyeu 50 s'engageant sur la cheminée centrale 41 et comprenant une partie interne venant s'accoupler avec l'entraineur 3.

Le bol de travail 4 comprend une paroi 43 cylindrique s'étendant depuis le fond 40 jusqu'à une extrémité supérieure ouverte qui est coiffée par un couvercle 6 transparent, le couvercle 6 comprenant une jupe 60 latérale venant entourer le bol de travail 4 et venant s'engager autour d'une partie conique de centrage 12 faisant saillie sur le socle de réception 10.

Conformément à la figure 2, la partie conique de centrage 12 comprend trois découpes 13 périphériques identiques réparties à 120° les unes des autres, les trois découpes 13 comportant un bord incliné formant une rampe de guidage vers une rainure formée sur la surface périphérique de la partie conique de centrage 12, chaque rainure présentant un bord inférieur muni d'une fente 14 débouchant sur un mécanisme de tige coulissante 16, 17, 18 disposé à l'intérieur du boîtier 1.

L'un des mécanismes de tige coulissante, disposé derrière une première découpe 13 située d'un côté de la face avant du boîtier 1, est constitué par une tige de commande 16, représentée en pointillé sur la figure 2. Cette tige de commande 16 est portée par un bâti, non représenté sur les figures, intégré dans le boîtier 1, et est ramenée par un ressort de rappel 16A dans une position relevée, de repos, dans laquelle la tige de commande 16 n'actionne pas un interrupteur 20 présent sur le circuit d'alimentation du moteur 2. Dans cette position de repos, le circuit d'alimentation électrique du moteur 2 est coupé et le moteur 2 est à l'arrêt.

La tige de commande 16 comporte une extrémité supérieure munie d'une touche de manoeuvre 16B qui est accessible au travers de la fente 14 de la découpe 13, la tige de commande 16 se déplaçant vers la bas lorsqu'une pression verticale est exercée sur la touche de manoeuvre 16B pour occuper une position de fonctionnement du moteur 2 dans laquelle la tige de commande 16 vient actionner l'interrupteur 20 du circuit d'alimentation du moteur 2 pour alimenter ce dernier en électricité.

La deuxième découpe 13 située de l'autre côté de la face avant du boîtier 1 masque une tige de sécurité 17, représentée en pointillé sur la figure 2, qui coopère avec un dispositif de freinage électrique du moteur. La tige de sécurité 17 est montée coulissante sur un bâti, non représenté sur les figures, disposé à l'intérieur du boîtier 1 entre une position relevée, de repos, vers laquelle elle est ramenée par un ressort de rappel 17A, et une position abaissée, dans laquelle le dispositif de freinage est mis hors service. La tige de sécurité 17 comporte une extrémité supérieure munie d'une touche de manoeuvre 17B qui est accessible au travers de la fente 14 de la découpe 13, la tige de sécurité 17 se déplaçant vers le bas lorsqu'une pression verticale est exercée sur la touche de manoeuvre 17B pour occuper la position abaissée.

De manière connue en soi, le dispositif de freinage électrique du moteur est constitué par un dispositif de mise en court-circuit de l'induit du moteur, non visible sur les figures, tel que décrit plus en détail dans la demande de brevet FR 2 140 891. Cette mise en court-circuit de l'induit du moteur est effectuée au moyen de deux interrupteurs 21 qui sont actionnés simultanément par la tige de sécurité 17 de telle manière que la mise en service du dispositif de freinage s'effectue lors du retour de la tige de sécurité 17 en position de repos par inversion du branchement électrique aux bornes de l'une des bobines du moteur 2.

La troisième découpe 13 du socle de réception 10, disposée vers l'arrière du boîtier 1, donne accès à une tige de rappel 18, représentée en pointillé sur la figure 2, la tige de rappel 18 étant montée coulissante sur un bâti, non représenté sur les figures, à l'encontre d'un ressort de rappel 18A. La tige de rappel 18 comprend une extrémité supérieure munie d'une touche de manoeuvre 18B qui est accessible au travers de la troisième découpe 13 et dont le but est de fournir un troisième point d'appui fournissant un effort de rappel équivalent à celui procuré par les tiges de commande 16 et de sécurité 17.

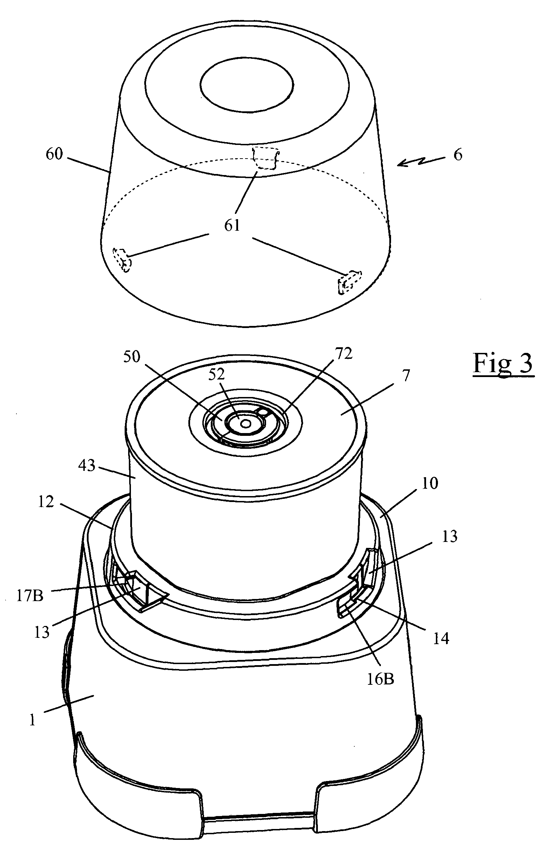

Conformément à la figure 3, la mise en marche du moteur 2 est commandée au moyen d'un déplacement vertical du couvercle 6 en direction du boîtier 1, le couvercle 6 comportant des pattes 61 venant s'engager dans les découpes 13 pour se positionner au dessus des touches de manoeuvre 16B, 17B, 18B. Lors de cette mise en place du couvercle 6 sur le boîtier 1, la tige de rappel 18 permet d'obtenir un appui équilibré du couvercle 6 sur les trois touches de manoeuvre 16B, 17B, 18B de sorte que le couvercle 6 reste en position horizontale, la mise en marche du moteur 2 s'effectuant classiquement en exerçant une pression verticale, vers le bas, sur le couvercle 6.

Plus particulièrement selon l'invention, le bol de travail 4 reçoit un opercule 7 venant fermer l'extrémité supérieure ouverte du bol de travail 4 pour confiner les ingrédients à l'intérieur de ce dernier.

Conformément à la figure 4, cet opercule 7 présente avantageusement la forme d'un disque, sensiblement plat, venant reposer sur un bord supérieur 44 du bol de travail 4, l'opercule 7 comportant une gorge 70 périphérique venant s'engager sur le bord supérieur 44 du bol de travail et présentant préférentiellement une jupe périphérique 71 venant s'engager par déformation élastique autour d'un renflement 44A du bord supérieur de la paroi 43, de manière à ce que l'opercule 7 soit clipsé sur le bol de travail 4.

L'opercule 7 présente également une ouverture centrale 72 permettant le passage de l'extrémité supérieure du moyeu 50 de l'outil de fragmentation 5, cette dernière comportant avantageusement un palier 52 dans lequel vient s'engager un axe de guidage 62 central supporté par le couvercle 6 lorsque le couvercle 6 est amené sur le boîtier 1.

L'ouverture centrale 72 de l'opercule présente préférentiellement un diamètre légèrement supérieur au diamètre de l'extrémité supérieure du moyeu 50 de l'outil de fragmentation 5 de sorte que l'espace entre le moyeu 50 et l'opercule 7 est réduit. De plus, l'ouverture centrale 72 de l'opercule se prolonge avantageusement par une paroi cylindrique 73 s'étendant sur quelques millimètres vers l'intérieur du bol de travail 4 de manière à former un écran contre les projections d'aliments de l'intérieur du bol de travail 4 vers l'espace s'étendant entre le moyeu 50 et l'opercule 7. L'opercule 7 présente ainsi l'avantage de supprimer tout risque de projection vers l'axe de guidage 62 et le palier 52, ce qui permet de garantir une parfaite rotation de l'outil de fragmentation 5 au niveau de cette liaison.

De manière préférentielle, l'opercule 7 est réalisé en matériau plastique transparent, tel que du polypropylène, et présente une épaisseur inférieure à 1 mm et de préférence de l'ordre de 0.5 mm.

Le fonctionnement de l'appareil ainsi réalisé va maintenant être décrit.

Lorsque l'utilisateur souhaite hacher ou mixer des aliments, il introduit ces derniers dans le bol de travail 4, après avoir mis en place le bol de travail 4 avec l'outil de fragmentation 5 sur le boîtier 1, puis vient clipser l'opercule 7 sur le bord supérieur 44 du bol de travail de manière à obtenir une chambre de mixage autour de l'outil de fragmentation 5 dont la partie supérieure est fermée par l'opercule 7.

L'utilisateur place alors le couvercle 6 sur le boîtier 1 de telle sorte que la jupe 60 du couvercle vient envelopper latéralement le bol de travail 4 et les pattes 61 viennent s'engager dans les découpes 13, au dessus des touches de manoeuvres 16B,17B,18B.

La mise en marche de l'appareil s'effectue alors classiquement en exerçant une poussée vers le bas sur le couvercle 6 de manière à ce que celui-ci se déplace verticalement vers le boîtier 1, les pattes 61 du couvercle 6 venant alors actionner simultanément la tige de commande 16 du moteur 2 et la tige de sécurité 17 pour commander simultanément la mise en marche du moteur 2 et la mise hors service des moyens de freinage.

Le déplacement vertical du couvercle 6 s'effectue jusqu'à ce qu'un épaulement 63 du couvercle 6 vienne buter contre l'opercule 7, en s'appuyant sur la surface de l'opercule 7 disposée en regard du bord supérieur 44 du bol de travail 4, de telle sorte que le couvercle 6 se trouve dans une position abaissée dans laquelle il exerce une pression sur l'opercule 7 garantissant un maintien de l'opercule 7 sur le bol de travail 4 lors du mixage des aliments. Pendant cette phase de mixage, l'opercule 7 forme une barrière étanche empêchant les débordements en dehors du bol de travail 4 sous l'effet de la force centrifuge, notamment dans le cas de mixage de poudres ou de préparations liquides ou semi-liquides.

De plus, la présence de l'opercule 7 présente l'avantage de contribuer à favoriser le mixage des aliments en venant perturber le flux de mixage, les aliments étant ramenés vers le centre du bol de travail 4 après avoir rebondi contre l'opercule 7.

Lorsque l'utilisateur soulève le couvercle 6, les tiges de commande 16 et de sécurité 17 sont ramenées simultanément dans leur position de repos par leur ressort de rappel 16A, 17A de sorte que l'alimentation du moteur 2 est interrompue et le moteur 2 est freiné instantanément par le dispositif de freinage.

Lors de cette phase de soulèvement du couvercle 6, l'opercule 7 reste en place sur le bol de travail 4 en étant maintenu à la fois par son propre poids et par l'engagement de la jupe périphérique 71 sur le renflement 44A du bol de travail. L'opercule 7 continue donc à jouer la fonction de couvercle d'étanchéité en empêchant tout débordement des aliments en dehors du bol de travail 4 lorsque les aliments broyés continuent de circuler dans le bol de travail 4 peu après l'ouverture de l'interrupteur 20 et que le flux de mixage est perturbé par l'arrêt brutal de l'outil de fragmentation 5.

Enfin, l'opercule 7 présente l'avantage d'être très simple à nettoyer et peu coûteux à fabriquer, plusieurs opercules 7 pouvant être livrés avec l'appareil.

Un tel appareil présente également l'avantage d'une grande sécurité d'utilisation, l'action du dispositif de freinage garantissant un temps d'arrêt de l'outil de fragmentation 5 inférieur au temps nécessaire à l'utilisateur pour retirer le couvercle 6 et accéder au contenu du bol de travail 4.

En particulier, la présence de l'opercule 7 sur le bol de travail 4 forme une barrière de sécurité supplémentaire, empêchant notamment un accès rapide au contenu du bol de travail 4.

Cependant, l'appareil ainsi réalisé pourra également fonctionner en l'absence de l'opercule 7 sur le bol de travail pour éviter par exemple des manipulations supplémentaires lorsque les ingrédients à traiter ne présentent pas de risque de débordement. En effet, dans un tel appareil, le couvercle 6 ne peut être retiré du socle de réception 10 qu'après un mouvement de rotation du couvercle 6, pour extraire les pattes 61 des découpes 13, de sorte que le temps nécessaire pour accéder au contenu du bol de travail 4 est suffisamment important pour garantir l'arrêt de l'outil de fragmentation 5 pendant le temps nécessaire à l'extraction du couvercle 6.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, l'opercule pourra présenter une paroi 7', illustrée en pointillé sur la figure 4, pénétrant à l'intérieur du bol de travail afin de réduire le volume de la chambre de mixage et améliorer le mixage lorsque seules de petites quantités d'aliments sont introduites dans le bol de travail.

A l'inverse, dans une autre variante de réalisation non représentée, l'opercule peut présenter une paroi bombée vers le couvercle pour augmenter le volume de la chambre de mixage.

## Revendications

1. Appareil électroménager de préparation culinaire comportant un boîtier (1) supportant un bol de travail (4) recevant un outil de fragmentation (5) et un couvercle (6) amovible, le bol de travail (4) comprenant un fond (40) et une paroi (43) s'étendant depuis le fond (40) du bol de travail (4) vers une extrémité supérieure ouverte, le boîtier (1) renfermant un moteur (2) pour l'entrainement de l'outil de fragmentation (5) dont le fonctionnement est commandé par un mouvement du couvercle (6) entre une position relevée dans laquelle le moteur (2) est à l'arrêt et une position abaissée dans laquelle le moteur (2) est en fonctionnement, **caractérisé en ce que** ledit appareil comporte un opercule (7) amovible, indépendant du couvercle (6), venant reposer sur la paroi (43) du bol de travail (4) pour masquer au moins partiellement l'extrémité supérieure ouverte du bol de travail (4).

2. Appareil électroménager de préparation culinaire selon la revendication 1, **caractérisé en ce que** ladite paroi (43) comporte un bord supérieur (44) délimitant l'extrémité supérieure ouverte et **en ce que** ledit opercule (7) repose sur le bord supérieur (44) du bol de travail (4).

3. Appareil électroménager de préparation culinaire selon la revendication 2, **caractérisé en ce que** ledit opercule (7) présente une épaisseur inférieure à 1 mm.

4. Appareil électroménager de préparation culinaire selon l'une quelconque des revendications 2 à 3, **caractérisé en ce que** ledit opercule (7) comporte une gorge périphérique (70) venant s'engager sur le bord supérieur (44) du bol de travail (4).

5. Appareil électroménager de préparation culinaire selon l'une quelconque des revendications 2 à 4, **caractérisé en ce que** ledit opercule (7) est maintenu par déformation élastique sur le bol de travail (4).

6. Appareil électroménager de préparation culinaire selon l'une quelconque des revendications 2 à 5, **caractérisé en ce que** le couvercle (6) comporte une surface (63) venant prendre appui sur l'opercule (7) lorsque le couvercle (6) est en position abaissée.

7. Appareil électroménager de préparation culinaire selon l'une quelconque des revendications 1 ou 6, **caractérisé en ce que** ledit outil de fragmentation (5) comporte un moyeu central (50) dont l'extrémité supérieure est guidée par un élément de guidage (62) porté par le couvercle (6) et **en ce que** l'opercule (7) comporte une ouverture centrale (72) pour le passage du moyeu central (50) de l'outil de fragmentation (5).

8. Appareil électroménager de préparation culinaire selon l'une quelconque des revendications 1 à 7, **caractérisé en ce que** le bol de travail (4) définit une chambre de mixage autour de l'outil de fragmentation (5) et en ce ledit opercule (7) présente une paroi (7') pénétrant à l'intérieur du bol de travail (4) afin de réduire le volume de la chambre de mixage.

9. Appareil électroménager de préparation culinaire selon l'une quelconque des revendications 1 à 8, **caractérisé en ce que** le couvercle (6) comporte une jupe (60) venant envelopper latéralement le bol de travail (4), la jupe (60) venant actionner au moins une touche de manoeuvre (16B) portée par le boîtier pour actionner un interrupteur (20) et commander la mise en marche du moteur (2) lorsqu'une pression verticale est exercée manuellement sur le couvercle (6).

10. Appareil électroménager de préparation culinaire selon la revendication 9, **caractérisé en ce qu'**il comporte un dispositif de freinage évitant que le moteur (2) continue de tourner sur son inertie après la commande d'arrêt du moteur (2) par ledit interrupteur (20).

## Patentansprüche

1. Elektrohaushaltsgerät für kulinarische Zubereitungen, umfassend ein Gehäuse (1), das einen Arbeitsbehälter (4) trägt, der ein Zerkleinerungswerkzeug (5) und einen abnehmbaren Deckel (6) aufnimmt, wobei der Arbeitsbehälter (4) einen Boden (40) und eine Wand (43) aufweist, die sich vom Boden (40) des Arbeitsbehälters (4) zu einem offenen oberen Ende erstreckt, wobei das Gehäuse (1) einen Motor (2) für den Antrieb des Zerkleinerungswerkzeugs (5) einschließt, dessen Betrieb durch eine Bewegung des Deckels (6) zwischen einer erhöhten Position, in der der Motor (2) stillsteht, und einer abgesenkten Position, in der der Motor (2) in Betrieb ist, gesteuert wird, **dadurch gekennzeichnet, dass** das Gerät eine abnehmbare Abdeckung (7) umfasst, die vom Deckel (6) unabhängig ist und auf der Wand (43) des Arbeitsbehälters (4) aufliegt, um wenigstens teilweise das offene obere Ende des Arbeitsbehälters (4) abzudecken.

2. Elektrohaushaltsgerät für kulinarische Zubereitungen nach Anspruch 1, **dadurch gekennzeichnet, dass** die Wand (43) einen oberen Rand (44) umfasst, der das offene obere Ende begrenzt, und dadurch, dass die Abdeckung (7) auf dem oberen Rand (44) des Arbeitsbehälters (4) aufliegt.

3. Elektrohaushaltsgerät für kulinarische Zubereitungen nach Anspruch 2, **dadurch gekennzeichnet, dass** die Abdeckung (7) eine Dicke von weniger als 1 mm aufweist.

4. Elektrohaushaltsgerät für kulinarische Zubereitungen nach einem der Ansprüche 2 bis 3, **dadurch gekennzeichnet, dass** die Abdeckung (7) eine umlaufende Rille (70) umfasst, die sich auf dem oberen Rand (44) des Arbeitsbehälters (4) einfügt.

5. Elektrohaushaltsgerät für kulinarische Zubereitungen nach einem der Ansprüche 2 bis 4, **dadurch gekennzeichnet, dass** die Abdeckung (7) durch elastische Verformung auf dem Arbeitsbehälter (4) festgehalten wird.

6. Elektrohaushaltsgerät für kulinarische Zubereitungen nach einem der Ansprüche 2 bis 5, **dadurch gekennzeichnet, dass** der Deckel (6) eine Fläche (63) umfasst, die auf die Abdeckung (7) drückt, wenn sich der Deckel (6) in der abgesenkten Position befindet.

7. Elektrohaushaltsgerät für kulinarische Zubereitungen nach einem der Ansprüche 1 oder 6, **dadurch gekennzeichnet, dass** das Zerkleinerungswerkzeug (5) eine Mittelnabe (50) umfasst, deren oberes Ende von einem Führungselement (62) geführt wird, das der Deckel (6) trägt, und dadurch, dass die Abdeckung (7) eine Mittelöffnung (72) für den Durchlass der Mittelnabe (50) des Zerkleinerungswerkzeugs (5) umfasst.

8. Elektrohaushaltsgerät für kulinarische Zubereitungen nach einem der Ansprüche 1 bis 7, **dadurch gekennzeichnet, dass** der Arbeitsbehälter (4) eine Mixkammer rund um das Zerkleinerungswerkzeug (5) definiert, und dadurch, dass die Abdeckung (7) eine Wand (7') aufweist, die in das Innere des Arbeitsbehälters (4) eindringt, um das Volumen der Mixkammer zu verringern.

9. Elektrohaushaltsgerät für kulinarische Zubereitungen nach einem der Ansprüche 1 bis 8, **dadurch gekennzeichnet, dass** der Deckel (6) eine Schürze (60) umfasst, die den Arbeitsbehälter (4) seitlich umhüllt, wobei die Schürze (60) wenigstens eine vom Gehäuse getragene Betätigungstaste (16B) betätigt, um einen Schalter (20) zu betätigen und die Inbetriebsetzung des Motors (2) zu steuern, wenn auf den Deckel (6) ein senkrechter Druck manuell ausgeübt wird.

10. Elektrohaushaltsgerät für kulinarische Zubereitungen nach Anspruch 9, **dadurch gekennzeichnet, dass** es eine Bremsvorrichtung umfasst, die verhindert, dass der Motor (2) nach dem durch den Schalter (20) gegebenen Befehl für die Abschaltung des Motors (2) aufgrund seiner Trägheit weiterläuft.

## Claims

1. An electrical food preparation appliance comprising a housing (1) supporting a work bowl (4) receiving a comminuting tool (5) and a removable cover (6), the work bowl (4) comprising a bottom (40) and a wall (43) extending from the bottom (40) of the work bowl (4) to an open upper end, the housing (1) containing a motor (2) for driving the comminuting tool (5) whose operation is controlled by a movement of the cover (6) between a raised position in which the motor (2) is stopped and a lowered position in which the motor (2) is in operation, **characterised in that** said appliance has a removable cap (7), independent of the cover (6), resting on the wall (43) of the work bowl (4) for masking at least partially the open upper end of the work bowl (4).

2. An electrical food preparation appliance according to claim 1, **characterised in that** said wall (43) has an upper edge (44) delimiting the open upper end and **in that** said cap (7) rests on the upper edge (44) of the work bowl (4).

3. An electrical food preparation appliance according to claim 2, **characterised in that** said cap (7) has a thickness less than 1 mm.

4. An electrical food preparation appliance according to any one of claims 2 to 3, **characterised in that** said cap (7) has a peripheral groove (70) which engages on the upper edge (44) of the work bowl (4).

5. An electrical food preparation appliance according to any one of claims 2 to 4, **characterised in that** said cap (7) is maintained by elastic deformation on the work bowl (4).

6. An electrical food preparation appliance according to any one of claims 2 to 5, **characterised in that** the cover (6) has a surface (63) resting on the cap (7) when the cover (6) is in a lowered position.

7. An electrical food preparation appliance according to any one of claims 1 or 6, **characterised in that** said comminuting tool (5) has a central hub (50) whose upper end is guided by a guide member (62) carried by the cover (6) and **in that** the cap (7) has a central opening (72) for the passage of the central hub (50) of the comminuting tool (5).

8. An electrical food preparation appliance according to any one of claims 1 to 7, **characterised in that** the work bowl (4) defines a mixing chamber around the comminuting tool (5) and **in that** said cap (7) has a wall (7') penetrating into the interior of the work bowl (4) in order to reduce the volume of the mixing chamber.

9. An electrical food preparation appliance according to any one of claims 1 to 8, **characterised in that** the cover (6) contains a skirt (60) laterally enveloping the work bowl (4), the skirt (60) actuating at least one operating button (16B) carried by the housing for actuating a switch (20) and commanding the motor (2) to start when a vertical pressure is exerted manually on the cover (6).

10. An electrical food preparation appliance according to claim 9, **characterised in that** it contains a brake device preventing the motor (2) from continuing to rotate on its own inertia after said switch (20) has commanded the motor (2) to stop.
